Europäisches Patentamt

European Patent Office

Office européen des brevets

(11) Publication number: **0 071 988**

**B1**

# EUROPEAN PATENT SPECIFICATION

(45) Date of publication of patent specification: **11.05.88**

(21) Application number: **82107094.3**

(22) Date of filing: **05.08.82**

(51) Int. Cl.⁴: **B 01 J 19/00,** G 05 D 21/02 // B29C35/00

(54) **Apparatus for automatically measuring and controlling chemical reaction amount.**

(30) Priority: **05.08.81 JP 123462/81**
**06.11.81 JP 178488/81**
**06.11.81 JP 178489/81**
**06.11.81 JP 178490/81**
**06.11.81 JP 178491/81**

(43) Date of publication of application:
**16.02.83 Bulletin 83/07**

(45) Publication of the grant of the patent:
**11.05.88 Bulletin 88/19**

(84) Designated Contracting States:
**DE FR GB IT**

(56) References cited:
**GB-A-1 165 671**
**GB-A-1 293 941**
**GB-A-1 479 700**
**US-A-3 659 974**
**US-A-3 819 915**

(73) Proprietor: **SUMITOMO RUBBER INDUSTRIES LIMITED**
**No. 1-1, Tsutsui-cho 1-chome**
**Chuo-ku Kobe-shi Hyogo 651 (JP)**

(72) Inventor: **Arimatsu, Toshio**
**2-8-8, Matsunouchi**
**Akashi-shi Hyogo-ken (JP)**

(74) Representative: **Vossius & Partner**
**Siebertstrasse 4 P.O. Box 86 07 67**
**D-8000 München 86 (DE)**

Courier Press, Leamington Spa, England.

## Description

The present invention relates to a method and an apparatus for improving the accuracy of measuring the extent of a chemical reaction in a reaction system with respect to the subject materials, such as the extent of reaction of a rubber vulcanization reaction or a high molecular material hardening reaction or the like.

Generally it is extremely important in chemical industry to control chemical reaction processes for the subject materials to improve reaction efficiency, product quality and yield ratio thereof. Thus, the present applicant developed an apparatus for measuring the extent of reaction, which was capable of easily measuring the extent of reaction in an operation field on the basis of controlling the reaction process. This apparatus is disclosed in JP—A—22025/1979 and JP—A—162126/1980. In general, according to the Arrhenius reaction speed equation in the chemical reaction with respect to the subject materials, the ratio of the extent of reaction, after time t at temperature T in the reaction system, with respect to the reference extent of reaction per time unit in the reference temperature $T_0$, i.e., the relative extent of reaction (equivalence extent of reaction) for the subject materials, is calculated by a microcomputer in accordance with the following equation (1) or equation (2) as its approximation equation so that the time lapse variation in the temperature measurement and the extent of reaction can be expressed as follows:

$$U = \int_0^t e^{-\frac{E}{R}\left(\frac{1}{T} - \frac{1}{T_0}\right)} \, dt \qquad (1)$$

$$U = \int_0^t \alpha^{\frac{T-T_0}{10}} \, dt \qquad (2)$$

wherein
   U: equivalence extent of reaction
   E: active energy
   R: gas constant
   T: temperature
   $T_0$: reference temperature
   α: temperature coefficient
   t: time

Actually the calculation by the above-described equation (1) or equation (2) is performed at constant time intervals in accordance with the temperature T detected by the temperature signal from the temperature detector provided in the reaction system, and the predetermined E, R, $T_0$, α.

The extent of reaction could be immediately and easily determined in the operation field by this measuring apparatus. However, the extent of reaction could not be automatically controlled in accordance with the measured value by this measuring apparatus.

US—A—3 819 915 discloses an apparatus and method for controlling the cure of a rubber compound according to the cross-link concentration thereof. Based on signals from a temperature sensitive probe embedded in the rubber, the induction time period where little cross-linking of the molecular structure occurs is calculated using the Arrhenius equation and a known activation energy. This calculated induction time is compared to a predetermined value and upon a match, calculation of the percent cross-link concentration is initiated using a known activation energy and compared with a predetermined percentage cross-link value. When the rubber compound is cured to the desired percentage of cross-link concentration, the curing process can be terminated.

GB—A—1 293 941 also discloses a method and apparatus for controlling the state of cure of curable articles which also make use of the Arrhenius equation.

GB—A—1 479 700 discloses a method of operating a mould press for position moulded rubber compounds with the aid of a digital computer, in which at intervals during the cure total required cure time calculated with the Arrhenius equation is compared with the elapsed time, and the mould press is automatically opened when the comparison indicates completion of cure.

GB—A—1 165 671 discloses a method of determining the state of cure of rubber articles in which the temperature of cure at at least two boundary surfaces of the article is sensed at intervals of time, the corresponding temperature at a point at which an adequate state of cure is desired is calculated, and the state of cure at said point in the article is determined on the basis of the relationship of the calculated cure temperature with a predetermined reference temperature of cure.

In a preferred embodiment the assessment of the relationship of the calculated cure temperature with the predetermined reference temperature of cure is not commenced until a predetermined minimum temperature of the point under consideration is attained.

It is an object of the present invention to provide a method and an apparatus for measuring the extent of a chemical reaction in a reaction system which are capable of measuring the extent of reaction with improved accuracy and thus controlling the extent of reaction with higher operating efficiency.

This object is achieved by the method and apparatus according to the claims. With the method and apparatus according to the invention insufficient reaction is reduced, the quality of the product is improved as the reaction becomes uniform, a critical reaction point where an article is gelled is easily found, and the error of the calculated equivalence extent of reaction is eliminated or at least reduced.

The method and apparatus according to the invention is preferably applied to measure and control the extent of chemical reaction of a rubber vulcanization reaction with high accuracy.

The features, aspects and advantages of the present invention will become more apparent from the following detailed description of the present invention when read in conjunction with the accompanying drawings, in which

Fig. 1 is a block diagram, in a first embodiment of the present invention, showing an arrangement of an apparatus for reaction measuring and controlling the extent of a chemical;

Fig. 2 is a circuit diagram of a starting apparatus for use in the first embodiment;

Fig. 3 is a circuit diagram of a preterminating apparatus for use in the first embodiment;

Fig. 4 is a block diagram, in a second embodiment of the present invention, showing an arrangement of an apparatus for measuring and controlling the extent of reaction;

Fig. 5 is a circuit diagram of a display stopping apparatus for use in the first embodiment,

Fig. 6 is a block diagram showing a modification of Fig. 1; and

Fig. 7 is a block diagram showing a modification of Fig. 4.

It is to be noted that the embodiments of the present invention will be described hereinafter in connection with, for example, the vulcanization reaction of rubber to be performed within a metal mold which is adapted to close or open in known manner.

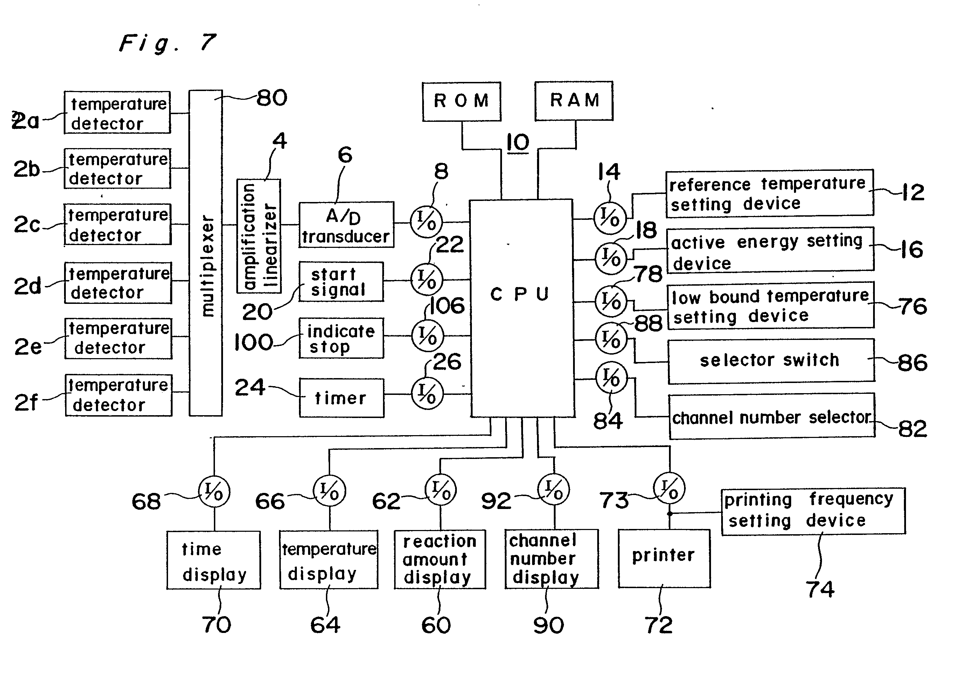

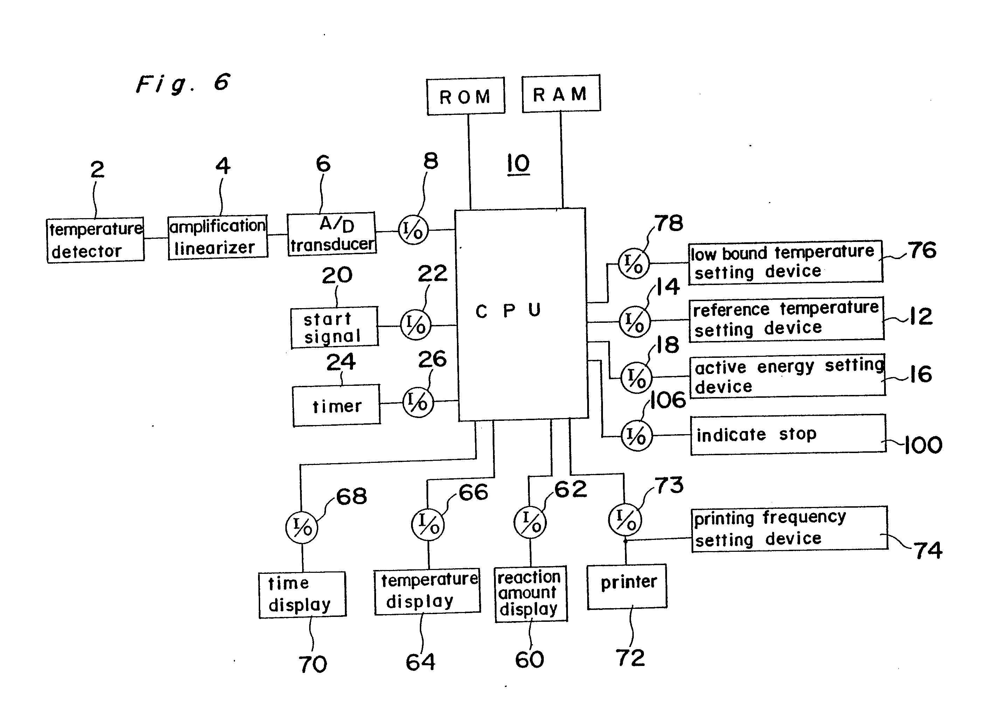

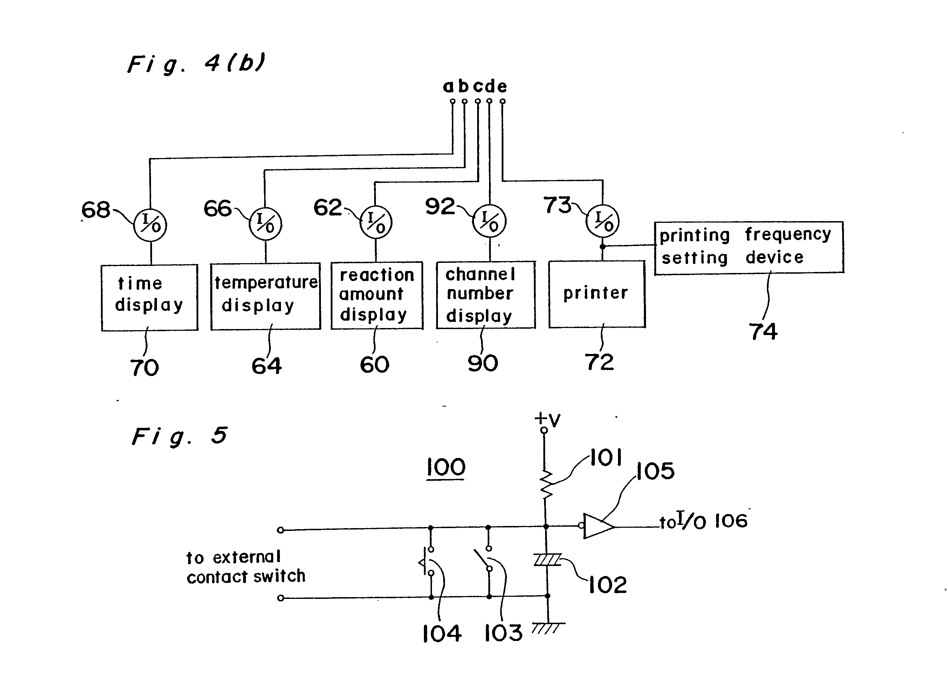

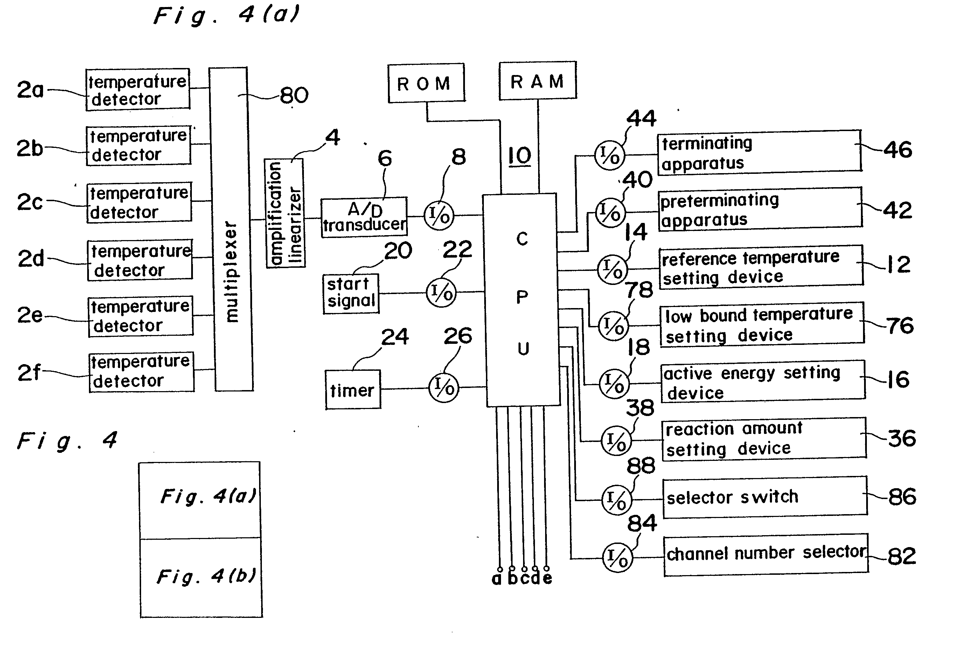

Fig. 1 through Fig. 3 show a first embodiment of an apparatus for automatically measuring and controlling the extent of a chemical reaction in accordance with the present invention.

Referring to Fig. 1, a temperature detector 2 such as thermoelectric couple is inserted into the portion of a reaction system such as the interior of the shoulder portion of a vulcanizing tire or is brought into contact with the outer surface of the shoulder portion or the interior of the reaction vessel or container such as a metal mold in a known manner. The temperature detector 2 may generate a temperature signal corresponding to the temperature of the insertion or contact position with respect to the subject materials. The temperature signal from the temperature detector 2 is fed to an amplification linearizer 4, where it is amplified and rectilinearized. Thereafter, it is converted into a digital temperature signal by an A/D transducer 6 and is fed through an input-output unit 8 to the CPU of a microcomputer 10.

In addition to the digital temperature signal, a reference temperature $T_0$ which is preset by an operator in a reference temperature setting device 12, is also fed through an input-output unit 14 to the microcomputer 10. In addition, an active energy E which is set in an active energy setting device 16 is also fed through an input-output unit 18.

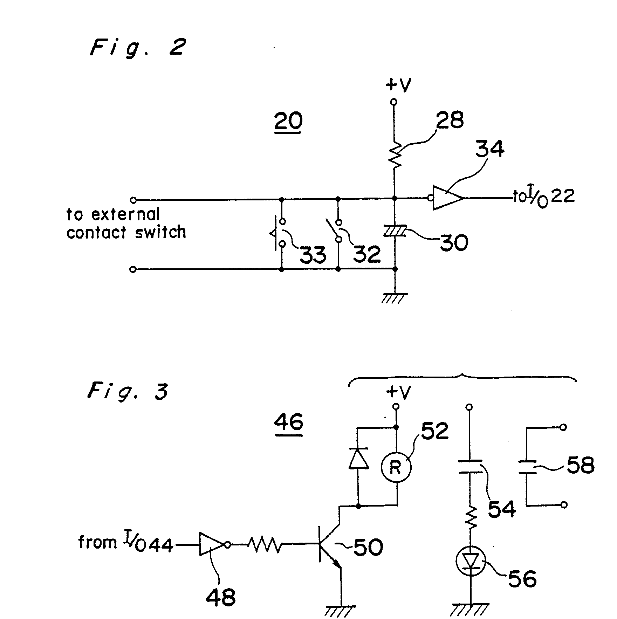

The microcomputer 10 is programmed to control the equivalence extent of reaction by an Arrhenius' equation (1) or its approximation equation (2) as mentioned above using the digital temperature signal, the reference temperature $T_0$, and the active energy E; this operation takes place every time a command signal, which is generated by a timer 24 at each of given time intervals, is fed through an input-output unit 26, after a start signal generated by a start signal generator 20 has been fed through an input-output unit 22 to the microcomputer 10. As the start signal generator 20 is used one as shown in Fig. 2. The start signal generator of Fig. 2 is designed to generate a start signal through the inversion of the voltage variation by an inverter 34; the start signal appears between the two ends of a capacitor 30 and is caused by the discharge of the capacitor 30 through a resistor 28 by a push-button 32 or a limit switch 33, which is designed to close at the same time when a metal mold accommodating a rubber tire to be vulcanized has been closed, or by a pulse signal generator for generating the pulse signal at the same time when the metal mold has been closed. Once the start signal is fed in during the calculation of the extent of reaction by depression of the push-button switch, the microcomputer 10 is programmed to erase all the data so far measured and to start the temperature measurement and the calculation newly from the beginning.

The microcomputer 10 is programmed to perform the comparison, as the equivalent extent of reaction is calculated, between the extent of reaction in, for example, 90% vulcanization of rubber supplied through the input-output unit 38 established in the extent of reaction setting device 36, the extent of reaction in 100% vulcanization, and each of the calculated equivalence extent of reaction so as to feed an output signal to a preterminating apparatus 42 through an input-output unit 40 when it is equal to the extent of reaction in the 90% vulcanization or larger than the extent of reaction, and to a terminating apparatus 46 through an input-output unit 44 when it is equal to the extent of reaction in the 100% vulcanization or larger than the extent of reaction. In cases where the reaction of the subject materials would continue to proceed considerably even after the opening of the metal mold, as for instance in the case of tires, the preterminating apparatus 42 is designed to open the metal mold earlier.

The preterminating apparatus 42 is constructed as shown in Fig. 3. In Fig. 3, an output signal fed from the input-output unit 40 is inverted by an inverter 48. The transistor 50 is conducted by the inversion output to operate a relay 52 to close a contact 54 to light a light-emitting diode 56 and to close a contact 58 to open the metal mold. Also, the output signal may be fed to a pulse generating apparatus (not shown) to generate pulses for use in the other apparatus. It is to be noted that an operator may open the metal mold with a free hand after the light emitting diode has been lit.

The terminating apparatus 46, as the preterminating apparatus 42, is adapted to light the light-emitting diode, to generate the contact signal or to generate the pulse. Accordingly, in the case of such a rubber vulcanization reaction, the contact 58 of the preterminating apparatus 42 is closed by the condition of the 90% vulcanization to automatically or manually open the metal mold. If the rubber is taken out from the metal mold at lighting of the light-emitting diode of the terminating apparatus 46 by the condition of the 100% vulcanization, the extent of reaction can be controlled extremely correctly.

The microcomputer 10 is programmed so that a reaction amount signal is fed through an input-output unit 62 to an extent of reaction display 60, each time the extent of reaction is calculated, to display the extent of reaction, a digital temperature signal at that time is fed through an input-output unit 66 to the temperature display 64, each time the extent of reaction is calculated, to display the temperature, furthermore a signal representing the lapse of the time from the reaction start is fed through an input-output unit 68 to a time display 70 to display the time from the reaction start. It is to be noted that the microcomputer 10 is also programmed so that the display may be stopped by the display stop apparatus 100. As shown in Fig. 5, the display stop apparatus 100 is adapted to close a manual switch 103, and a limit switch 104 which is adapted to close when the metal mold opens, to discharge the electric charge of a capacitor 102. Also, a pulse signal generator (not shown) for generating pulse signals when the metal mold opens is adapted to discharge the electric charge of a capacitor 102 through a resistor 101. Change in the voltage caused thereby across the capacitor 102 is inversed by an inverter 105 and is fed to the microcomputer 10 through the input-output unit 106. Even if the display is stopped by the display stop apparatus 100, the microcomputer 10 is performing the operation for continuously calculating the reaction amount, and, when the manual switch 103 and the limit switch 104 have been opened, or when the pulse from pulse signal generator has stopped, the present extent of reaction calculated within the microcomputer 10 is displayed. Also, the extent of reaction and the measured temperature can be printed, through an input-output unit 73, on the printer 72. Generally, as the temperature measurement and the calculation are performed more frequently, the accuracy of controlling the extent of reaction becomes higher, approximating the predetermined value. The data to be outputted by the printer 72 need not be outputted as many times as the temperature measurement frequency and the calculation frequency of the extent of reaction. Assume that the frequency, which has been set in a printing frequency setting device 74 is, for example, "2", then the data is printed every time the reaction quantity is calculated twice. It is to be noted that the printing is performed every time "1" is set.

Also, a low bound temperature signal, which is set in a low bound temperature setting device 76, is fed through an input-output unit 78 to the microcomputer 10. The microcomputer 10 is designed to compare a digital temperature signal with a low bound temperature signal every time the extent of reaction is calculated. When the digital temperature signal is lower than the low bound temperature signal, the microcomputer is programmed so that the extent of reaction at this time point is 0, namely, the extent of reaction is not calculated. For instance, it is well known that in the case of large bulk extents of reaction as in tires, it takes longer to raise the temperature of the tire and the low temperature condition for the tire is maintained for a long time. According to the calculation of the equivalence extent of reaction by the Arrhenius equation (1) or its approximation equation (2), the equivalence extent of reaction is small in the case of relatively low temperatures, but the error between the actual extent and the expected extent becomes considerably larger in the case of long reaction time due to the cumulative total of the time. To remove the error, the extent of reaction at that time is assumed to become 0 when the digital temperature signal is lower than the low bound temperature signal.

As mentioned above, the apparatus of the first embodiment comprises at least one temperature detector disposed in the interior or the outer surface of the reaction system or in a container, a computer having an operation function for calculating the extent of reaction in accordance with the temperature signal of the temperature detector, and a comparison function for generating an output signal when the extent of reaction is equal to a preset extent or exceeds the preset extent, and a timer for getting the operation and comparison functions performed at given intervals. The apparatus is adapted to perform the steps of detecting the extent of reaction for each given interval in accordance with a temperature signal from one temperature detector disposed in the interior or the outer surface of a reaction system, or in a container, and comparing each of the extents of reaction with a predetermined established extent of reaction to generate the output signal when the extent of reaction is equal to the established extent of reaction or exceeds the established extent of reaction, thereby producing an effect which makes it possible to measure the extent of reaction with high accuracy and to control the extent of reaction.

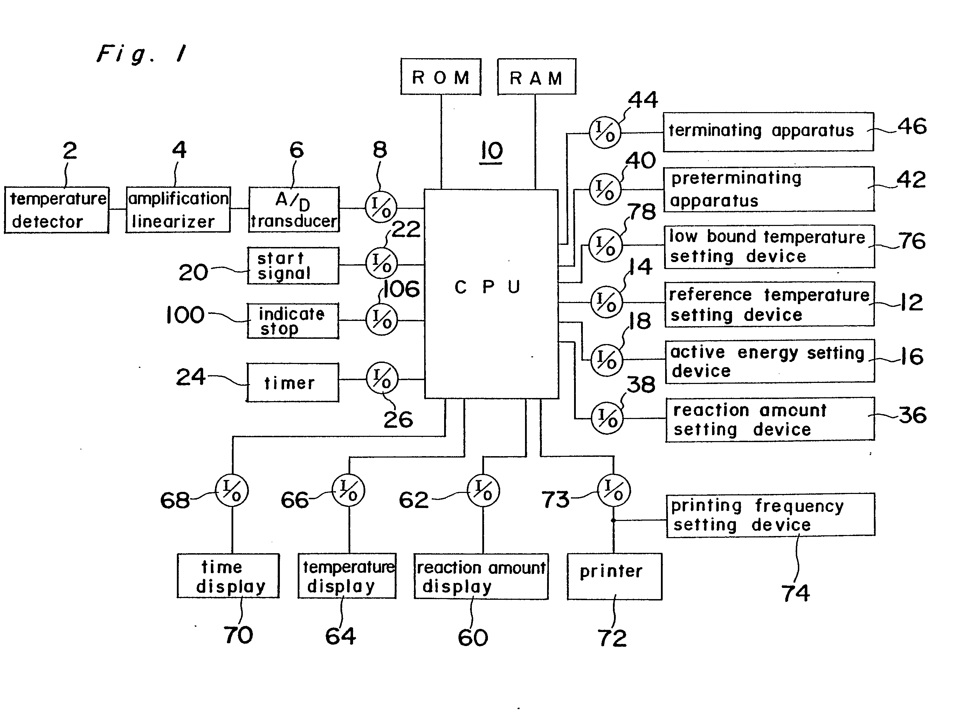

Fig. 4 is a block diagram of a second embodiment of an apparatus according to the present invention. In the first embodiment, there is only one temperature detector 2, but in the second embodiment, a plurality of, for example, six temperature detectors 2a through 2f are provided within a reaction system. The temperature detectors 2a through 2f are different from each other in that they are inserted into the interiors of the respective different positions, for instance, along the peripheral direction of the

**0 071 988**

shoulder portion of the vulcanizing tire or they are kept in contact with the outer surface of the different position or with the interior of a metal mold corresponding to the different position. Each of the temperature signals from the temperature detectors 2a through 2f are rectilinearized and amplified by an amplification linearizer 4 through a multiplexer 80. Thereafter, it is converted into a digital temperature signal by an A/D transducer 6 and is fed to the microcomputer 10 through an input-output unit 8. It is to be noted that the microcomputer 10 is programmed to load every time a digital temperature signal is fed in, which corresponds to the temperature signal of the temperature detectors such as 2a, 2c, 2e selected by a channel number selector signal which is fed through an input-output unit 84 from the channel number selector switch 82, to thereby calculate the equivalence extent of reaction of the positions where the temperature detectors 2a, 2c, 2e are provided in accordance with a digital temperature signal, reference temperature signal and an active energy signal. The combinations of temperature detectors 2a through 2f are $[(2^6-1)=63]$ in number. Also, this calculation for the equivalence extent of reaction is performed after the start signal has been generated and when the timer 24 is transmitting a command signal.

Also, the microcomputer 10 is programmed so that the arithmetic average of each of the equivalence extents of reaction of positions where temperature detectors such as temperature detectors 2a, 2c, 2e selected by a channel number selector switch 82 are provided may be obtained, or the maximum and the minimum of the respective equivalence extent of reaction or the extent of reaction of the specified channel may be selected. The realization of the arithmetic averages or the selection of the maximum or the minimum to the equivalence extent of reaction or the extent of reaction is determined by a selector signal fed to the microcomputer 10 through an input-output unit 88 from the selector switch 86.

The microcomputer 10 is programmed so that an output signal is fed to a preterminating apparatus 42 when it is equal to the extent of reaction in 90% vulcanization or larger than the extent of reaction, and to a terminating apparatus 46 when it is equal to the extent of reaction in 100% vulcanization or larger than the extent of reaction, through comparison of the arithmetic average value, the maximum value, minimum value or the extent of reaction at a measurement point selected by the selector switch 86 with the set value of the extent of reaction setting device 36 as in the first embodiment. The construction of the other components is the same as in the first embodiment except that a channel number display 90 is adapted to display a sensor selected by the channel number selector switch 82 and an input-output unit 92 is provided for the channel number display.

In the above construction, it is to be noted that the apparatus for measuring and controlling the extent of reaction according to the present invention calculates the extent of reaction each time a given time has elapsed and compares the calculated extent of reaction with the preset extent of reaction in displaying and printing the extent of reaction. The reaction can be automatically controlled with respect to the subject material, thus resulting in higher operating efficiency for the extent of reaction. Particularly in a second embodiment, the arithmetic average of a plurality of calculated extents of reaction can be compared with the preset extent of reaction. Thus, as compared to the first embodiment, the accuracy of the extent of reaction becomes higher, so that the reaction control such as vulcanization accuracy is improved in the second embodiment. In the second embodiment, as the minimum value from a plurality, of extents of reaction can be compared with the established extent of reaction, insufficient reaction is removed and the quality is improved, thus resulting in uniform reaction. Also, as the maximum value from a plurality of extents of reaction can be compared with the established extent of reaction, a critical reaction point where an article is gelled can be easily found, thus improving reaction accuracy.

In addition, the apparatus for measuring and controlling the extent of reaction according to the present invention compares a low bound temperature signal produced by the low bound temperature setting device 76 with a digital temperature setting signal every time the extent of reaction is calculated. When the digital temperature signal is smaller than the low bound temperature signal, the extent of reaction at this time is assumed to be 0 to eliminate or at least reduce the error as described in the first embodiment. If the digital temperature signal is relatively smaller, the equivalence extent of reaction calculated by the Arrhenius' reaction speed equation (1) or its approximation equation (2) becomes an extremely small value. However, when the reaction time t is long due to accumulation through time, the calculated equivalence extent of reaction contains a considerable error. To remove the error, the extent of reaction is assumed to be 0 when the digital temperature signal is lower than the low bound temperature signal. Accordingly, as the extent of reaction can be calculated with high accuracy, the controlling accuracy of the extent of reaction is improved.

Also, as a start signal generating apparatus 20 is provided in the both described embodiments, the measurement, calculation and controlling can be automatically started when the vulcanizing press is closed. By the closure of the push-button switch 32 of the start signal generating apparatus 20, all the data so far measured can be erased so that the temperature measurement, calculation and controlling can be newly started. In both embodiments, the printing frequency setting device 74 is provided, and the measured temperature, and the extent of reaction are printed for each established frequency of the measurement, and the calculation performed. In the above-described embodiments, a thermoelectric couple was used as a sensor, while platinum resistor or the like can be used in place of the thermoelectric couple.

Although the present invention has fully been described in connection with the preferred embodiments thereof with reference to the accompanying drawing, it is to be noted that various changes and modifications are apparent to those skilled in the art. By way of example, the concept of the present invention can be applied not only to the apparatus for automatically measuring and controlling the extent of a chemical reaction such as described, but also any other type of apparatuses as shown in Figs. 6 and 7, wherein certain components such as the terminating apparatus, preterminating apparatus, extent of reaction setting apparatus can be eliminated from the apparatuses of Figs. 1 and 4, respectively, if they are not necessary for operation.

Fig. 6 shows an apparatus for measuring and controlling the extent of reaction comprising at least one temperature detector 2 disposed in the interior, the outer surface of the reaction system or in a container, a computer 10 having an operation function for calculating the extent of reaction in accordance with the temperature signal of said temperature detector 2, and a stop function for terminating said operation function when said temperature signal is lower than the predetermined low bound temperature value. Also, Fig. 7 shows an apparatus for measuring and controlling the extent of reaction comprising a plurality of temperature detectors 2a—2f disposed in the respective different positions in the interior, the outer surface of the reaction system or in the vessel, a multiplexer 80 for receiving the temperature signal from said temperature detectors 2a—2f, a microcomputer 10 having an operation function for calculating the extent of reaction in accordance with the temperature signal from said multiplexer 80, a stop function for terminating said operation function when said temperature signal is lower than the predetermined low bound temperature value, an average function for obtaining the arithmetic average of each of the extents of reaction, and a selection function for selecting the maximum and the minimum of the extents of reaction, and a selector switch 86 for selecting the outputs from said functions of the microcomputer 10.

## Claims

1. A method of improving the accuracy of measuring the extent of a chemical reaction in a reaction system, comprising the steps of obtaining at intervals in time, at least one temperature signal corresponding to the temperature at at least one position in the reaction system and/or in a container in which the reaction system is arranged and calculating the extent of reaction in accordance with the Arrhenius equation, on the basis of the at least one temperature signal, characterized in that said method further comprises the step of setting the extent of reaction in the said equation, to be zero when the temperature corresponding to the at least one temperature signal is lower than a predetermined low bound temperature in any time interval during the reaction.

2. The method according to claim 1, characterized in that a plurality of temperature signals are obtained, the extent of reaction is calculated on the basis of each temperature signal, and an arithmetic average and/or the maximum and/or the minimum of the calculated extents of reaction is calculated.

3. The method according to claim 2, characterized in that one or more of the plurality of temperature signals each corresponding to the temperature of a particular position of the reaction system is arbitrarily selected for calculating the extent of reaction representing said particular positions in the reaction system.

4. The method according to claims 1 to 3, characterized in that said method further comprises the steps of comparing the calculated extent of reaction with a preset extent of reaction, and producing a signal when said calculated extent of reaction reaches or exceeds said preset extent of reaction.

5. An apparatus for improving the accuracy of measuring the extent of a chemical reaction in a reaction system, the apparatus comprising at least one temperature detector (2) supplying at intervals in time at least one temperature signal and being disposed in the reaction system and/or in a container in which the reaction system is arranged, and a computer (10) having an operation function for calculating the extent of reaction in accordance with the Arrhenius equation on the basis of the temperature signal of at least one temperature detector (2), characterized in that said computer (10) further has a stop function (76) for stopping the operation function and setting the extent of reaction in the said equation to be zero when the temperature corresponding to the at least one temperature signal is lower than a predetermined low bound temperature in any time interval during the reaction.

6. The apparatus according to claim 5, characterized in that a plurality of temperature detectors (2a—2f) is provided and said computer (10) further has a function (86) for obtaining the arithmetic average of the calculated extents of reaction and/or a function for selecting the maximum or the minimum of the calculated extents of reaction.

7. The apparatus according to claim 6, characterized in that said apparatus further comprises a channel selector switch (82) for selecting one or more of the plurality of temperature signals each corresponding to the temperature of a particular position of the reaction system for calculating the extent of reaction representing said particular positions in the reaction system.

8. The apparatus according to claims 5 to 7, characterized in that said apparatus further comprises a comparator for comparing the calculated extent of reaction with a preset extent of reaction and for producing a signal when said calculated extent of reaction reaches or exceeds said preset extent of reaction.

9. The apparatus according to claim 7 or 8, characterized in that said apparatus further comprises a selector switch (86) for selecting a particular combination of functions of said computer said functions being operation function, stop function, arithmetic average function, maximum selecting function, and minimum selecting function.

10. The apparatus according to claims 5 to 9, characterized in that said apparatus has a plurality of temperature detectors (2a—2f) and that said apparatus further comprises a multiplexer (80) for supplying the temperature signals from the detectors (2a—2f) to said computer (10).

11. The apparatus according to claims 5 to 10, characterized in that said computer (10) has a start signal generator (20) for generating a signal for the actuation of said operation function.

12. The apparatus according to claims 5 to 11, characterized in that said computer (10) has a printer (72) for printing, for each of preset values of a printing frequency setting device (74), the extent of reaction sequentially calculated.

13. The apparatus according to claims 8 to 12, characterized in that said apparatus has a timer (24) for getting said operation and comparison functions performed at given intervals.

**Patentansprüche**

1. Verfahren zum Verbessern der Genauigkeit beim Messen des Reaktionsgrades einer chemischen Reaktion in einem Reaktionssystem, mit den Verfahrensschritten, daß in zeitlichen Intervallen mindestens ein Temperatursignal erhalten wird, das der Temperatur an mindestens einer Position in dem Reaktionssystem und/oder in einem Behälter entspricht, in dem das Reaktionssystem angeordnet ist, und daß der Reaktionsgrad gemäß der Arrhenius-Gleichung auf der Basis des mindestens einen Temperatursignals berechnet wird, dadurch gekennzeichnet, daß das Verfahren ferner den Verfahrensschritt aufweist, daß der Reaktionsgrad der Gleichung gleich Null gesetzt wird, wenn die dem mindestens einem Temperatursignal entsprechende Temperatur in irgendeinem Zeitintervall während der Reaktion niedriger ist als eine bestimmte untere Grenztemperatur.

2. Verfahren nach Anspruch 1, dadurch gekennzeichnet, daß mehrere Temperatursignale erhalten werden, daß der Reaktionsgrad auf der Basis jedes Temperatursignals berechnet wird, und daß ein arithmetischer Mittelwert und/oder das Maximum und/oder das Minimum der berechneten Reaktionsgrade berechnet wird.

3. Verfahren nach Anspruch 2, dadurch gekennzeichnet, daß eines oder mehrere der mehreren Temperatursignale, von denen jedes der Temperatur einer bestimmten Position des Reaktionssystems entspricht, willkürlich ausgewählt werden, um den Reaktionsgrad zu berechnen, der die bestimmten Positionen in dem Reaktionssystem repräsentiert.

4. Verfahren nach den Ansprüchen 1 bis 3, dadurch gekennzeichnet, daß das Verfahren ferner die Verfahrensschritte umfaßt, daß der berechnete Reaktionsgrad mit einem vorgegebenen Reaktionsgrad verglichen wird, und daß ein Signale erzeugt wird, wenn der berechnete Reaktionsgrad den vorgegebenen Reaktionsgrad erreicht oder übersteigt.

5. Vorrichtung zum Verbessern der Genauigkeit beim Messen des Reaktionsgrades einer chemischen Reaktion in einem Reaktionssystem, mit mindestens einem Temperaturdetektor (2), der in zeitlichen Intervallen mindestens ein Temperatursignal liefert und in dem Reaktionssystem und/oder in einem Behälter angeordnet ist, in dem das Reaktionssystem angeordnet ist, und mit einem Rechner (10), der eine Betriebsfunktion aufweist, um den Reaktionsgrad gemäß der Arrhenius-Gleichung auf der Basis des Temperatursignals mindestens eines Temperaturdetektors (2) zu berechnen, dadurch gekennzeichnet, daß der Rechner (10) ferner eine Stoppfunktion (76) aufweist, um die Betriebsfunktion zu stoppen und den Reaktionsgrad der Gleichung gleich Null zu setzen, wenn die dem mindestens einem Temperatursignal entsprechende Temperatur in irgendeinem Zeitintervall während der Reaktion niedriger ist als eine bestimmte untere Grenztemperatur.

6. Vorrichtung nach Anspruch 5, dadurch gekennzeichnet, daß mehrere Temperaturdetektoren (2a—2f) vorgesehen sind und daß der Rechner (10) ferner eine Funktion (86) aufweist, um den arithmetischen Mittelwert der berechneten Reaktionsgrade zu erhalten und/oder eine Funktion, um das Maximum oder das Minimum der berechneten Reaktionsgrade zu wählen.

7. Vorrichtung nach Anspruch 6, dadurch gekennzeichnet, daß die Vorrichtung ferner einen Kanalwählschalter (82) aufweist, um eines oder mehrere der mehreren Temperatursignale zu wählen, die jeweils der Temperatur einer bestimmten Position des Reaktionssystems entsprechen, um den Reaktionsgrad zu berechnen, der die bestimmten Positionen in dem Reaktionssystem repräsentiert.

8. Vorrichtung nach den Ansprüchen 5 bis 7, dadurch gekennzeichnet, daß die Vorrichtung ferner einen Vergleicher zum Vergleichen des berechneten Reaktionsgrades mit einem vorgegebenen Reaktionsgrad und zum Erzeugen eines Signals aufweist, wenn der berechnete Reaktionsgrad den vorgegebenen Reaktionsgrad erreicht oder übersteigt.

9. Vorrichtung nach Anspruch 7 oder 8, dadurch gekennzeichnet, daß die Vorrichtung ferner einen Wählschalter (86) zum Wählen einer bestimmten Kombination von Funktionen des Rechners aufweist, wobei diese Funktionen die Betriebsfunktion, die Stoppfunktion, die Funktion zur Bildung des arithmetischen Mittelwerts, die Funktion zum Wählen des Maximums und die Funktion zum Wählen des Minimums sind.

10. Vorrichtung nach den Ansprüchen 5 bis 9, dadurch gekennzeichnet, daß die Vorrichtung mehrere Temperaturdetektoren (2a—2f) aufweist und daß die Vorrichtung ferner einen Multiplexer (80) aufweist, um die Temperatursignale von den Detektoren (2a—2f) zu dem Rechner (10) zu liefern.

11. Vorrichtung nach den Ansprüchen 5 bis 10, dadurch gekennzeichnet, daß der Rechner (10) einen Startsignalgenerator (20) zum Erzeugen eines Signals für die Betätigung der Betriebsfunktion aufweist.

12. Vorrichtung nach den Ansprüchen 5 bis 11, dadurch gekennzeichnet, daß der Rechner (10) einen Drucker (72) zum Drucken des nacheinander berechneten Reaktionsgrades für jeden der vorgegebenen Werte einer Druckfrequenzeinstellvorrichtung (74) aufweist.

13. Vorrichtung nach den Ansprüchen 8 bis 12, dadurch gekennzeichnet, daß die Vorrichtung einen Zeitgeber (24) aufweist, um die Betriebs- und Vergleichsfunktionen zu gegebenen Intervallen durchzuführen.

**Revendications**

1. Procédé permettant d'améliorer la précision de la mesure du degré d'une réaction chimique dans un système de réaction, comprenant les opérations qui consistent à obtenir, à certains intervalles de temps, au moins un signal de température correspondant à la température régnant en au moins une position dans le système de réaction et, ou bien, le conteneur dans lequel le système de réaction est placé, et à calculer le degré de réaction selon l'équation Arrhenius sur la base du signal ou des signaux de température, caractérisé en ce qu'il comprend en outre l'opération consistant à fixer à zéro le degré de réaction dans ladite équation lorsque la température correspondant au signal ou aux signaux de température est inférieure à une température limite inférieure prédéterminée dans un quelconque intervalle de temps pendant la réaction.

2. Procédé selon la revendication 1, caractérisé en ce qu'on obtient plusieurs signaux de température, on calcule le degré de réaction sur la base de chaque signal de température, et on calcule une moyenne arithmétique et, ou bien, le maximum et, ou bien, le minimum des degrés de réaction calculés.

3. Procédé selon la revendication 2, caractérisé en ce qu'on choisit arbitrairement un ou plusieurs desdits signaux de température, correspondant chacun à la température d'une position particulière du système de réaction, pour calculer le degré de réaction représentant lesdites positions particulières dans le système de réaction.

4. Procédé selon les revendications 1 à 3, caractérisé en ce qu'il comprend en outre les opérations consistant à comparer le degré de réaction calculé avec un degré de réaction fixé à l'avance, et à produire un signal lorsque ledit degré de réaction calculé atteint ou dépasse ledit degré de réaction fixé à l'avance.

5. Appareil permettant d'améliorer la précision de la mesure du degré d'une réaction chimique dans un système de réaction, l'appareil comprenant au moins un détecteur de température (2) délivrant à certains intervalles de temps au moins un signal de température et étant disposé dans le système de réaction et, ou bien, dans le conteneur dans lequel le système de réaction est placé, et un calculateur (10) possédant une fonction d'exécution servant à calculer le degré de réaction selon l'équation d'Arrhenius sur la base du signal de température du ou des détecteurs de température (2), caractérisé en ce que ledit calculateur (10) possède en outre une fonction d'arrêt (76) servant à arrêter la fonction d'exécution et à fixer à zéro le degré de réaction dans ladite équation lorsque la température correspondant au signal ou aux signaux de température est inférieure à une température limite inférieure prédéterminée dans un quelconque intervalle de temps pendant la réaction.

6. Appareil selon la revendication 5, caractérisé en ce que plusieurs détecteurs de température (2a—2f) sont prévus et ledit calculateur (10) possède en outre une fonction (86) servant à obtenir la moyenne arithmétique des degrés de réaction calculés et, ou bien, une fonction de sélection du maximum ou du minimum des degrés de réaction calculés.

7. Appareil selon la revendication 6, caractérisé en ce qu'il comprend en outre un commutateur (82) sélecteur de canal servant à sélectionner un ou plusieurs des signaux de température, correspondant chacun à la température d'une position particulière dans le système de réaction afin de calculer le degré de réaction représentant lesdites positions particulières dans le système de réaction.

8. Appareil selon les revendications 5 à 7, caractérisé en ce qu'il comprend en outre un comparateur servant à comparer le degré de réaction calculé avec un degré de réaction fixé à l'avance et à produire un signal lorsque ledit degré de réaction calculé atteint ou dépasse ledit degré de réaction fixé à l'avance.

9. Appareil selon la revendication 7 ou 8, caractérisé en ce qu'il comprend en outre un commutateur sélecteur (86) servant à sélectionner une combinaison particulière de fonctions dudit calculateur, lesdites fonctions étant une fonction d'exécution, une fonction d'arrêt, une fonction de prise de moyenne arithmétique, une fonction de sélection de maximum, et une fonction de sélection de minimum.

10. Appareil selon les revendications 5 à 9, caractérisé en ce qu'il possède plusieurs détecteurs de température (2a—2f) et en ce qu'il comprend en outre un multiplexeur (80) servant à délivrer audit calculateur (10) les signaux de température venant des détecteurs (2a—2f).

11. Appareil selon les revendications 5 à 10, caractérisé en ce que ledit calculateur (10) possède un générateur (20) de signal de début servan à produire un signal pour l'actionnement de ladite fonction d'exécution.

12. Appareil selon les revendications 5 à 11, caractérisé en ce que ledit calculateur (10) possède une imprimante (72) servant à imprimer, pour chacune des valeurs fixées à l'avance d'un dispositif (74) de fixation de fréquence d'impression, le degré de réaction séquentiellement calculé.

13. Appareil selon les revendications 8 à 12, caractérisé en ce qu'il possède un minuteur (24) servant à faire en sorte que lesdites fonctions d'exécution et de comparaison soient exécutées à des intervalles donnés.

**Fig. 7**

## Fig. 6

temperature detector [2] — amplification linearizer [4] — A/D transducer [6] — I/o [8] — C P U [10]

ROM — RAM

start signal [20] — I/o [22]

timer [24] — I/o [26]

I/o [78] — low bound temperature setting device [76]

I/o [14] — reference temperature setting device [12]

I/o [18] — active energy setting device [16]

I/o [106] — indicate stop [100]

I/o [68] — time display [70]

I/o [66] — temperature display [64]

I/o [62] — reaction amount display [60]

I/o [73] — printer [72]

printing frequency setting device [74]

0 071 988

## Fig. 4(b)

a b c d e

68 — I/O    66 — I/O    62 — I/O    92 — I/O    73 — I/O

| time display | temperature display | reaction amount display | channel number display | printer |

printing frequency setting device

70      64      60      90      72      74

## Fig. 5

+V

100

101   105

to I/O 106

to external contact switch

102

104   103

0 071 988

Fig. 4(a)

Fig. 4

| Fig. 4(a) |
| Fig. 4(b) |

*Fig. 2*

20

+V

28

34

to I/O 22

to external
contact switch

33  32

30

*Fig. 3*

46

+V

52

58

54

from I/O 44

48

50

56

Fig. 1

temperature detector — 2
amplification linearizer — 4
A/D transducer — 6
I/O — 8
ROM
RAM
CPU — 10
I/O — 44 → terminating apparatus — 46
I/O — 40 → preterminating apparatus — 42
I/O — 78 → low bound temperature setting device — 76
I/O — 14 → reference temperature setting device — 12
I/O — 18 → active energy setting device — 16
I/O — 38 → reaction amount setting device — 36

start signal — 20
I/O — 22
indicate stop — 100
I/O — 106
timer — 24
I/O — 26

I/O — 68 → time display — 70
I/O — 66 → temperature display — 64
I/O — 62 → reaction amount display — 60
I/O — 73 → printer — 72
printing frequency setting device — 74

0 071 988